# EUROPÄISCHE PATENTANMELDUNG

(11) **EP 1 207 091 A1**
(43) Veröffentlichungstag der Anmeldung: **22.05.2002**
(21) Anmeldenummer: 01250346.2
(22) Anmeldetag: 04.10.2001
(51) Int. Cl.: B61L 1/06, B61K 9/12, G01L 1/24

(54) **Einrichtung zum Erkennen von Unregelmässigkeiten an Eisenbahnrädern**

(30) Priorität: 16.11.2000 DE 10057740
(71) Anmelder: SIEMENS AKTIENGESELLSCHAFT, 80333 München (DE)
(72) Erfinder: Blum, Karsten, 38179 Gross Schwuelper (DE); Harald, Schmidt, 38104 Braunschweig (DE); Truemper, Ulf, Dr., 38173 Evessen (DE)

(57) **Zusammenfassung**

Zum Erkennen von Unregelmäßigkeiten an Eisenbahnrädern sind Glasfasersensoren vorgesehen, deren mindestens eine Glasfaser mechanisch mit einer Fahrschiene gekoppelt ist. Der Glasfasersensor reagiert auf die beim Abrollen von Fahrzeugrädern auf der Fahrschiene in die Fahrschiene eingekoppelten Stoßbelastungen und moduliert mit seinem Ausgangssignal das Eingangssignal einer Messeinrichtung, die dazu eingerichtet ist, die ihr zugeführten Sensorsignale nach etwaigen markanten Pegeländerungen zu analysieren. Hinreichend ausgeprägte hoch- und/oder niederfrequente Pegeländerungen lassen auf eine Unregelmäßigkeit an dem am Sensor vorüberlaufenden Fahrzeugrad schließen, z. B. auf eine Flachstelle.

## Beschreibung

Die Erfindung bezieht sich auf eine Einrichtung nach dem Oberbegriff des Patentanspruches 1.

Im Eisenbahnbetrieb treten durch die Belastung während der Fahrt immer wieder Unregelmäßigkeiten an den Laufflächen der Räder bzw. Radreifen auf, die zum einen den Oberbau und die Komponenten der Drehgestelle belasten und zum anderen den Fahrkomfort von Personen und Gütern verschlechtern. Z. B. entstehen durch Inhomogenitäten des Radmaterials unrunde Räder, durch das Bremsen kommt es u. U. zu Flachstellen. Dies gilt insbesondere für den Cargo-Bereich, bei dem die Fahrzeuge über keine Sensorik zum Vermeiden von blockierenden Rädern verfügen. Kommt es bei oder nach Bremsvorgängen zu einer Blockade von Fahrzeugrädern, so führt dies häufig zu Flachstellen an den Rädern. Beim Abrollen von Rädern mit Flachstellen werden in die Fahrschienen Stoßbelastungen eingetragen, die den Oberbau ungünstig beeinflussen und zu weiteren Beschädigungen der betroffenen Fahrzeugräder und deren Lager führen können.

Zum Erkennen von Fahrzeugrädern mit den oben genannten Unregelmäßigkeiten werden üblicherweise Dehnungsmessstreifen verwendet, die an den Fahrschienen angebracht werden (DE 44 39 342 A1). An jedem Messpunkt sind z. B. acht Dehnungsmessstreifen vorzusehen; mehrere Messpunkte bilden eine Messstelle. Der Aufwand für die Installation der Dehnungsmessstreifen und die Bewertung ihrer Sensorsignale ist erheblich.

Es ist auch bereits bekannt, das perodische Schlagen der Flachstellen von Fahrzeugrädern auf Fahrschienen durch ein Schallaufnehmersystem zu erfassen und zu analysieren (DE 198 58 937 A1). Mit solchen Schallaufnehmern lassen sich zwar Züge mit defekten Radreifen erkennen; an welchem Rad solche Flachstellen aber tatsächlich vorhanden sind, lässt sich nur schwer bestimmen, weil die von den Flachstellen in den Fahrschienen ausgelösten akustischen Signale registriert werden lange bevor und lange nachdem das defekte Fahrzeugrad das Schallaufnehmersystem passiert.

Aufgabe der Erfindung ist es, eine Einrichtung zum Erkennen von Unregelmäßigkeiten anzugeben, das einerseits wenig aufwendig sowohl hinsichtlich der Installation als auch hinsichtlich der Auswertung der Sensorsignale ist und das darüber hinaus hinreichend selektiv ist, um defekte Eisenbahnräder zweifelsfrei erkennen zu können.

Die Erfindung löst diese Aufgabe bei einer nach dem Oberbegriff des Patentanspruches 1 ausgebildeten Einrichtung durch die Anwendung der kennzeichnenden Merkmale des Patentanspruches 1. Danach wird als Sensor zum Erkennen von Flachstellen erfindungsgemäß ein Glasfasersensor verwendet.

Glasfasersensoren zum Erkennen von auf einer Fahrschiene vorüberlaufenden Einsenbahnfahrzeugrädern sind bekannt (DE 35 37 588 C2, DE 195 49 404 C2, Siemens "Technik Report" Jahrgang 2, Nr. 2 vom Januar 1999, Seite 77). Diese bekannten Glasfasersensoren dienen ausschließlich der Ortung von Fahrzeugrädern, nicht der Beschreibung bestimmter Zustände dieser Fahrzeugräder. Sie reagieren in erster Linie auf das Gewicht der vorüberlaufenden Fahrzeugräder und bewerten etwaige von den Fahrzeugrädern in die Fahrschienen eingetragenen dynamischen Beschleunigungskräfte in gar keiner Weise. Für die erfindungsgemäß vorgesehene Nutzung von Glasfasersensoren zum Erkennen von Unregelmäßigkeiten im Laufflächenbereich der Fahrzeugräder bedurfte es daher der Überwindung eines Vorurteils der Fachwelt, wonach Glasfasersensoren ausschließlich für die Registrierung erheblicher Radlasten, nicht aber für die Registrierung demgegenüber relativ geringer Kräfte, nämlich der durch Unregelmäßigkeiten in eine Fahrschiene eingetragenen Stoßbelastungen, geeignet sind.

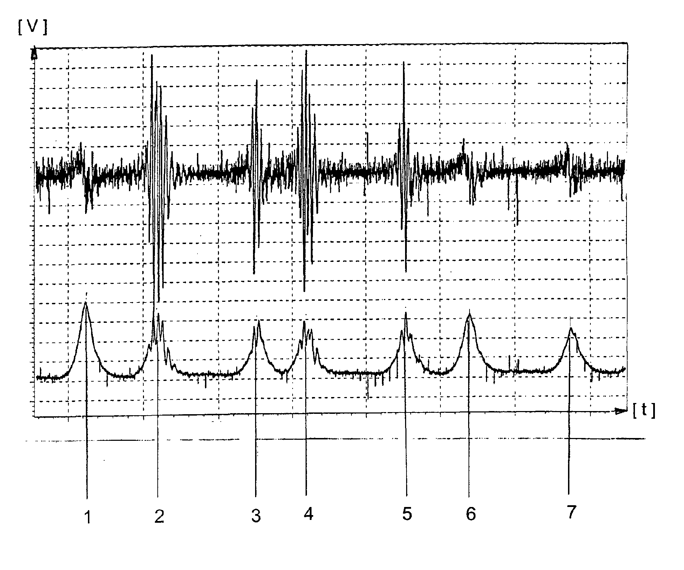

Die Erfindung ist nachstehend näher erläutert, wobei auf ein in der Zeichnung dargestelltes Diagramm Bezug genommen wird. Der Sensor zum Erkennen eines auf einer Fahrschiene rollenden Fahrzeugrades mit mindestens einer Unregelmäßigkeit ist als Glasfasersensor ausgebildet. Dieser weist mindestens eine mit der Fahrschiene mechanisch gekoppelte Glasfaser auf, die bei Belastung durch ein Fahrzeugrad elastisch verformbar ist. Diese Verformung kann eine vorübergehende Längenänderung oder eine vorübergehende Durchmesseränderung der Glasfaser bewirken. Im ersten Fall verlängert sich der vom Licht in der Glasfaser zurückzulegende Weg, im zweiten Fall verändert sich die Dämpfung der Glasfaser in markanter Weise. Dies kann von einer geeigneten Messeinrichtung detektiert und in ein entsprechende Erkennungssignal für eine Unregelmäßigkeit umgesetzt werden. Die von einem Fahrzeugrad mit einer Unregelmäßigkeit beim Abrollen auf einer Fahrschiene vorzugsweise periodisch in die Fahrschiene eingetragenen stoßförmigen Belastungen setzen sich über eine eng begrenzte Schienenlänge fort und werden dabei, wenn sich das Fahrzeugrad im Nahbereich des Sensors befindet, von dem erfindungsgemäß vorgesehenen Glasfasersensor detektiert. Auf größere Entfernungen haben die durch Unregelmäßigkeiten an den Laufflächen der Fahrzeugräder in eine Fahrschiene eingetragenen stoßförmigen Belastungen keinen nennenswerten Einfluss mehr auf den Sensor. Räder mit detektierten Unregelmäßigkeiten können beispielsweise in Verbindung mit einem Achszähler bestimmt oder z. B. durch Anspritzen mit Farbe optisch gekennzeichnet werden.

Die Zeichnung zeigt in ausschnittsweiser Darstellung Signale einer eingangsseitig von einem Glasfasersensor beaufschlagten Messeinrichtung, wie sie beim Vorüberlaufen mehrerer Fahrzeugräder 1 bis 7 eines Güterzuges an einer Messstelle entstehen. Die dargestellten Signale werden von einer Vorverarbeitung zur Verfügung gestellt, die die eigentlichen Beeinflussungssignale des Glasfasersensors in Spannungssignale umsetzt. Die obere Kurve gibt den über Filter separierten höherfrequenten, die untere Kurve den demgegenüber niederfrequenten Anteil des Messsignals dar. Mit dem niederfrequenten Anteil des Messsignals lassen sich die vorbeilaufenden Fahrzeugräder detektieren, wobei aus den dynamischen Flankensignalen dieses Signals auf das Vorhandensein oder Nichvorhandensein einer Unregelmäßigkeit an dem jeweils vorbeigelaufenen Fahrzeugrad geschlossen werden kann. Noch eindeutiger wird die Aussage über etwaige Unregelmäßigkeiten bei Ausnutzung des höherfrequenten Messsignals. Aus diesem Messsignal ist erkennbar, dass vier hintereinander laufende Fahrzeugräder 2 bis 5 mindestens jeweils eine Flachstelle aufweisen. Indiz für eine solche Unregelmäßigkeit sind die durch die Stoßbelastungen der Unregelmäßigkeit in die Fahrschiene eingeleiteten Schwingungen, die zu Längen- oder Durchmesseränderungen der Glasfaser des Glasfasersensors führen. Die Messeinrichtung oder eine zugeordnete Auswerteeinrichtung analysiert die in der Zeichnung dargestellten Signale hinsichtlich Frequenz und Amplitude und bestimmt hieraus, ob es sich bei einem vorüberlaufenen Fahrzeugrad um ein solches mit oder ohne Unregelmäßigkeit handelt.

Die mindestens eine Glasfaser des Glasfasersensors ist in geeigneter Weise so an einer Fahrschiene festzulegen, dass die von einer Unregelmäßigkeit eingekoppelten Beschleunigungskräfte von der Glasfaser des Glasfasersensors aufgenommen werden können. Eine erste Ausführungsform des Glasfasersensors sieht vor, die mindestens eine Glasfaser des Glasfasersensors zwischen dem Schienenfuß der Fahrschiene und einer die Fahrschiene abstützenden Rippenplatte oder Schwelle oder aber zwischen der Rippenplatte und der Schwelle anzuordnen. Eine andere vorteilhafte Ausgestaltung des erfindungsgemäßen Glasfasersensors sieht vor, die mindestens eine Glasfaser des Glasfasersensors in einer Querbohrung im Schienenweg der Fahrschiene anzuordnen. In beiden Fällen besteht ein inniger Kontakt zwischen der Glasfaser und der Fahrschiene, so dass die Glasfaser die eingekoppelten Belastungen aufnehmen und darauf reagieren kann.

Die mindestens eine Glasfaser des Glasfasersensors ist vorteilhaft über ihre gesamte Länge oder mindestens in dem außerhalb der Fahrschiene gelegenen Teil mit einer Umhüllung zu versehen, die den Glasfasersensor gegen mechanische Beschädigungen weitgehend schützt.

## Patentansprüche

1. Einrichtung zum Erkennen einer Unregelmäßigkeit an einem Eisenbahnrad durch Beeinflussung eines gleisseitigen, mit einer Fahrschiene mechanisch gekoppelten Sensors,
**dadurch gekennzeichnet,**
**dass** der Sensor ein Glasfasersensor ist mit mindestens einer Glasfaser, die bei Belastung durch ein Fahrzeugrad elastisch verformbar ist und dabei das Eingangssignal einer Messeinrichtung nach Maßgabe der jeweiligen Verformung beeinflußt, wobei die Messeinrichtung dazu eingerichtet ist, aus dem Auftreten hoch- und/oder niederfrequenter Pegeländerungen eines vom Sensor beim Passieren eines Fahrzeugrades detektierten Signals auf das Vorhandensein/Nichtvorhandensein mindestens einer Unregelmäßigkeit an dem betreffenden Fahrzeugrad zu schließen.

2. Einrichtung nach Anspruch 1,
**dadurch gekennzeichnet,**
**dass** die mindestens eine Glasfaser des Glasfasersensors zwischen dem Schienenfuß der Fahrschiene und einer die Fahrschiene abstützenden Rippenplatte oder Schwelle oder zwischen der Rippenplatte und der diese abstützenden Schwelle angeordnet ist.

3. Einrichtung nach Anspruch 1,
**dadurch gekennzeichnet,**
**dass** die mindestens eine Glasfaser des Glasfasersensors in einer Querbohrung im Schienensteg der Fahrschiene angeordnet ist.

4. Einrichtung nach einem der Ansprüche 1 bis 3,
**dadurch gekennzeichnet,**
**dass** die Glasfaser des Glasfasersensors mindestens partiell in eine schützende Umhüllung eingebettet ist.
